Europäisches Patentamt

European Patent Office

Office européen des brevets

(11) Publication number: 0 472 261 A2

# EUROPEAN PATENT APPLICATION

(21) Application number: 91301950.1

(22) Date of filing: 08.03.91

(51) Int. Cl.⁵: G06F 1/26

(30) Priority: 10.07.90 US 550655

(43) Date of publication of application:
26.02.92 Bulletin 92/09

(84) Designated Contracting States:
DE FR GB IT

(71) Applicant: ACER INCORPORATED
347 Chung Feng Road
Lungtan, Taoyuan 32514(TW)

(72) Inventor: Lin, Steven
10-3, F, No. 129, Sec.1, Fu-Hsing S.Rd.
Taipei(TW)

Inventor: Kao, Kent
No. 5, Lane 85, Ting-Kuo St.
Keelung City(TW)
Inventor: Hsu, Robert
4F, No.3 Alley 37, Cung-Ching Lane,
Chung-Kang Rd
Hsing-Chuang City, Taipei Hsien(TW)

(74) Representative: Skone James, Robert Edmund
et al
GILL JENNINGS & EVERY 53-64 Chancery
Lane
London WC2A 1HN(GB)

(54) Data entry device having two power supply modes.

(57) A battery powered data entry device has a remote mode, in which the battery is used for its operation and the data are transmitted through infrared communication, and local mode in which power is obtained from the host system and data are transmitted through a cord connector. A switching circuit (SW1, SW2, SW3) and a reset circuit (6) are provided in the data entry device to automatically switch between the local mode and the remote mode operation of keyboard data entry, depending on whether the cord connector is connected to the data entry device.

FIG. I

EP 0 472 261 A2

Rank Xerox (UK) Business Services

The present invention relates to a battery powered date entry device having a remote mode, in which a battery is used for its operation and the data are transmitted, for example, through infrared communication, and a local mode in which power is obtained from the host system and data are transmitted through, for example, a cord.

Infrared communications links are used in many applications. Probably, the most common is the remote control of television receivers. Another example is the communication system in which data entry devices are coupled to a microcomputer through infrared links. US-A-4,313,227 shows such an infrared communication system in which the main keyboard is in the microcomputer, and a joystick device and a keypad are coupled via infrared links. US-A-4,628,541 shows such an infrared communication system for coupling data from a battery powered entry device with reduced power consumption. The infrared linked data entry operation set forth above is termed "remote mode" operation herein. The data entry operation through the cord links is termed "local mode" operation herein.

It has been observed that existing battery powered cordless keyboard entry devices can be operated in the remote mode only. Once the battery power is consumed down to a certain level, and if no spare battery is available nearby, there is not any other means to proceed with the work at hand.

It also has been noted, in working environments with several data entry devices in the remote mode operation at the same time, that interference may occur among the data entry devices so that the data communication between the data entry devices and the host system is less accurate than desired.

In accordance with the present invention, a data entry device, comprises a microprocessor; switch means responsive to the presence or absence of power from the external power source to switch between supplying power to the device from the external power source in the presence of power from the external power source and supplying power from the internal power source in the absence of power from the external power source, the switch means outputting a trigger signal when the supply of power is from the internal power source; and a reset circuit responsive to a signal from the external power source and the trigger signal from the switch means to generate a reset signal to the microprocessor whenever the power is switched between the internal power source and the external power source.

An example of a computer system incorporating a data entry device according to the present invention will now be described with reference to the accompanying drawings in which:-

Figure 1 shows a schematic diagram of the data entry device;

Figure 2 shows the detailed arrangement of the reset circuit of Figure 1; and

Figure 3 shows a schematic diagram of a computer and the data entry device.

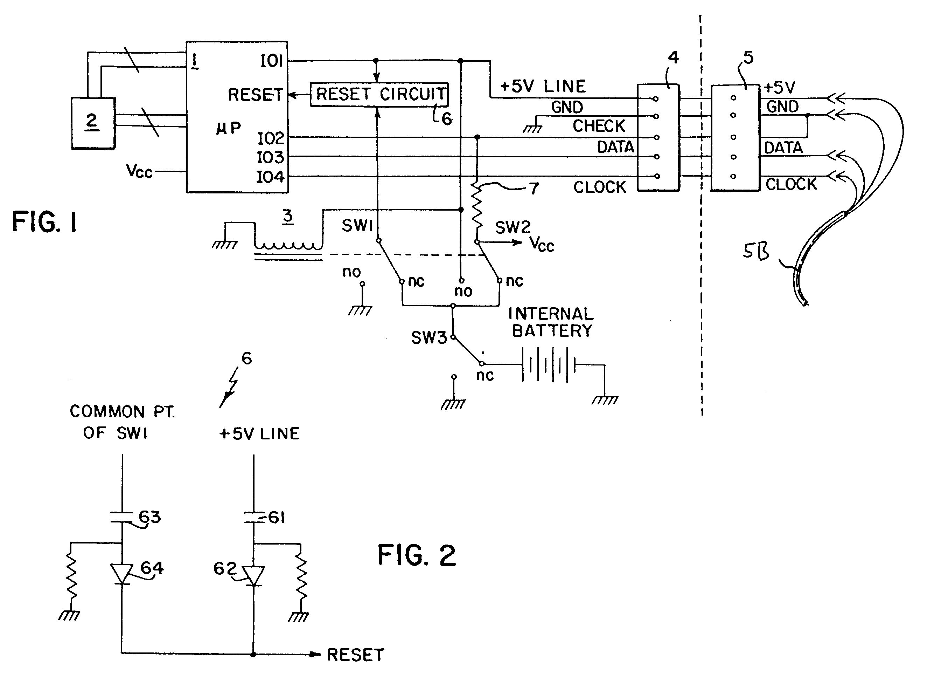

In Figure 1, a keyboard entry device includes a microprocessor 1 coupled to a matrix keyboard 2. Microprocessor 1 may be the 80C51 microprocessor produced by the Intel Corporation. For simplicity, only the inputs and outputs of the microprocessor particularly relevant to the present invention have been shown.

The data entry device of this invention includes a switch means SW3 having a common point switchable between the internal battery source and ground potential.

The normally open point (no) of a switch means SW2 and one terminal of relay solenoid 3 are coupled to the +5v line of a keyboard connector 4 as shown. The switch means SW2 has a common point switchable between a normally closed point (nc) and the normally open point by the actuation of relay solenoid 3 when the solenoid is energized by the external power source +5v from a keyboard connector 5. The common point of switch means SW2 provides voltage $V_{cc}$ to microprocessor 1, in a manner hereinafter described, to energize the microprocessor. The common point of switch means SW2 is connected through a resistor 7 to the data check line between connector 4 and microprocessor 1 and to microprocessor pin 102. Resistor 7 may typically be .5 to 1 megohm.

Switch means SW1 has a common point switchable between a normally closed point and normally open point. Switch means SW1 is also switchable by the actuation of relay solenoid 3. The common point of switch means SW1 is connected to the ground through the normally open point when the solenoid 3 is energized by the external power source +5v from the keyboard connector 5. The normally closed point of switch means SW1 is connected to the normally closed point of switch means SW2 and to common point of the switch means SW3.

A reset circuit 6 is provided for inputting the signals from the external power source and from the common point of switch means SW1 to generate a reset signal to microprocessor 1 whenever the power is switched between the external power source +5v and the internal battery.

In Figure 2, the detailed arrangement of reset circuit 6 is disclosed. The reset circuit 6 includes a first capacitor 61 with one plate connected to the anode of a first diode 62 and being grounded through a discharging means, such as a resistor. Capacitor 61 is adapted to couple to the signal of the external power source. The reset circuit 6 also includes a second capacitor 63 with one plate connected to the anode of a second diode 64 and being grounded through a discharging means. Capacitor 63 is adapted to couple to a trigger signal from the switch means SW1. The reset signal is the output from the connection point of the cathodes of diodes 62,64.

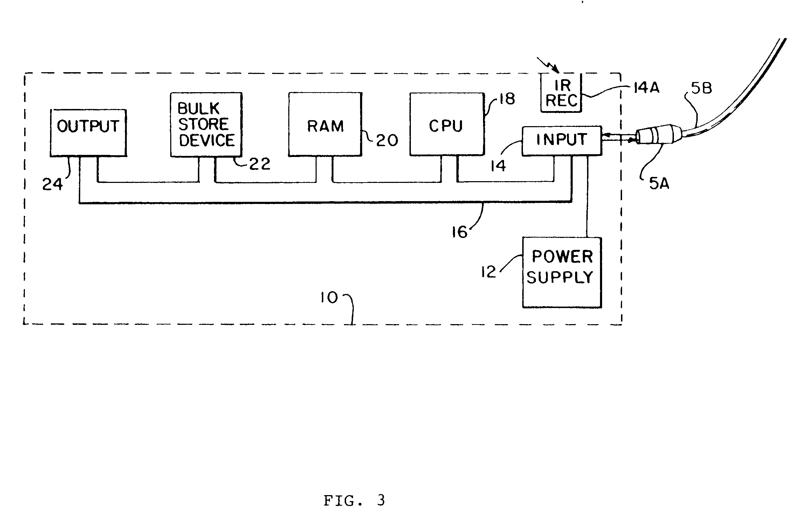

Figure 3 shows the keyboard entry device in conjunction with a host system, such as personal computer 10. Computer 10 includes power supply 12. Input element 14 receives a connection means 5A of a connection cord 5B. Connection means 5A provides input data to, and receives power, from input element 14. The cord 5B is connected to keyboard connector 5. Input element 14 also includes infrared receiver 14A that receives infrared signals from infrared transmitter 14B of the data entry device. Input element 14 applies the input data to bus 16 of computer 10. CPU 18, random access memory 20, bulk storage device 22, and output element 24 are also coupled to bus 16.

## Operation

### Initiation of the Local Mode

When the local mode is intended by the user, connector 5 of the keyboard cord 5B from the host system, such as personal computer 10 is connected to the connector 4 of the data entry device shown in the right hand side of Figure 1 and connection means 5A is connected to input element 14. If the host system power is on at this moment, the relay solenoid 3 of the switch means will be energized by the external power source +5v. Switch means SW1, SW2 are switched from the normally closed (NC) point to the normally open (NO) point. As a result of the operation of switch means SW2, the energization of the data entry device is switched from the internal battery to external power source +5v as the common point of switch means SW2 provides voltage $V_{cc}$ to microprocessor 1. The internal battery power is cut off from the data entry device.

Referring to Figure 2, the capacitor 61 of the reset circuit 6 is charged by the incoming external power +5v to produce a reset signal pulse to the microprocessor 1. The switch means SW1 will be switched to the ground potential at the normally open (NO) point. The capacitor 63 of the reset circuit 6 of Figure 2 will thus be discharged for subsequent events, such as the loss of the external power source +5v.

The microprocessor 1 senses the I01 and I02 pin subsequent to the reset signal. If the I01 is logical HIGH and I02 is logical LOW, the microprocessor 1 will enter into the routine handling the local mode. The data communication will be transmitted through the data and clock lines of the connector 4 of the data entry device.

### Return to the Remote Mode

To switch to the remote mode, the connector 5 is disconnected from the connector 4. After the external power source +5v is lost, the switch means SW1, SW2 will be switched to their normally closed points because of the deenergization of the relay solenoid 3. Referring to the switch SW1, the capacitor 63 of the reset circuit 6 will be charged by the internal battery to produce a reset signal pulse. Through the switch means SW2, the internal battery will supply power to the data entry device by supplying voltage $V_{cc}$.

The microprocessor 1 senses the I01 and I02 pins subsequent to the reset signal. If the 101 is logical LOW and I02 is logical HIGH, the microprocessor 1 will enter into the routine handling data in the remote mode. The data communication will be transmitted through the infrared LED elements 14A and 14B. Pin I02 will be a logical HIGH due to the connection to the common point of SW2 through resistor 7.

### Initiation of the Remote Mode

When the switch means SW3 is switched, as by hand, to the normally open (NO) point while the connector 4 is disconnected from connector 5, the data entry device will be in the power off state of the remote mode. The capacitor 63 of the reset circuit 6 will be discharged to ground through the normally closed point of the switch means SW1. When the user moves the switch means SW3 to the power on position, the capacitor 63 will be charged by the internal battery to produce a reset signal to the microprocessor 1. Thus, the microprocessor 1 ascertains the condition of pins I01 and I02 again and enters the routine of the remote mode.

## Claims

1. A data entry device, the supply of power to which is switchable between an external power source and a power source internal to the device, the data entry device comprising a microprocessor (1); switch means (SW1,SW2,SW3) responsive to the presence or absence of power from the external power source to switch between supplying power to the device from the external power source in the presence of power from the external power source and supplying power from the internal power source in the absence of power from the external power source, the switch means outputting a trigger signal when the supply of power is from the internal power source; and a reset circuit (6) responsive to a signal from the external power source and the trigger signal from the switch means to generate a reset signal to the microprocessor (1) whenever the power is switched between the internal power source and the external power source.

2. A data entry device in accordance with claim 1, wherein the switch means comprises a first switch (SW1) switchable away from the internal power source when the supply of power from the external power source is sensed; and a second switch (SW2) switchable from the internal power source to the external power source to supply power from the external power source to the data entry device when the presence of power from the external power source is switched.

3. A data entry device in accordance with claim 2, wherein the switch means further comprises a third switch (SW3) connectable to the internal power supply, for providing power from the internal power supply to the first and second switches.

4. A data entry device in accordance with claim 3, wherein the third switch (SW3) is manually operable.

5. A data entry device in accordance with any of the preceding claims wherein the switch means includes actuation means (3) energized by the external power supply for carrying out the switching action of the switch means.

6. A data entry device according to claim 5, when dependant on claim 2, wherein the actuation means includes a solenoid (3) energized by the external power supply for operating the first and second switches (SW1, SW2)

7. A data entry device in accordance with any of the preceding claims wherein the reset circuit (6) comprises a first capacitor (61) including first and second plates the first plate being adapted to be coupled to the signal of the external power source, and the second plate being connected to capacitor discharge means; a first diode (62), the anode of the first diode being connected to the second plate of the first capacitor (61); a second capacitor (63) including first and second plates the first plate being adapted to be coupled to the switch means for receiving the trigger signal therefrom, and the second plate being connected to capacitor discharge means; and a second diode (64), the anode of the second diode being connected to the second plate of the second capacitor (63) wherein the cathodes of the first and second diodes (62,64) are coupled together to provide the reset signal to the microprocessor.

8. A data entry device in accordance with any of the preceding claims adapted as a data entry device for a computer.

9. A computer system comprising a computer (10) having a power supply (12), a bus (16), and an input means (14), a central processing unit (18), memory system (22), and output means (24) coupled to the bus; a data entry device according to any of the preceding claims for providing input data to the input means of the computer; connection means (5A,5B) for electrically connecting the data entry device to the computer; and data transmission means (14B) for transmitting data from the data entry device to the computer separately from the connection means wherein the data entry device has an internal power supply, the external power source is constituted by the computer power supply (12), and wherein the reset circuit (6) is responsive to a signal from the computer power supply and the trigger signal from the switch means to generate the reset signal to the microprocessor whenever the power is switched between the internal power source and the computer power supply so as to cause the data entry device to select one of the connection means or the data transmission means for the transmission of data rom the data entry device to the computer.

10. A computer system in accordance with claim 9, wherein the data entry device includes logic means coupled to the microprocessor for indicating whether the connection means is connected to the computer and data entry means, and wherein the microprocessor selects one of the connection means or data transmission means responsive to the condition of the logic means and the generation of the reset signal.

11. A computer system in accordance with claim 9 or claim 10 wherein the data transmission means comprises infrared transmission means.

4

FIG. 1

FIG. 2

FIG. 3